# EUROPEAN PATENT APPLICATION

(11) **EP 4 773 571 A1**
(43) Date of publication of application: **08.07.2026**
(21) Application number: 24905932.0
(22) Date of filing: 12.11.2024
(51) Int. Cl.: H04L 49/109

(54) **MESSAGE PROCESSING METHOD AND APPARATUS**

(30) Priority: 20.12.2023 CN 202311769695
(71) Applicant: Sanechips Technology Co., Ltd., Shenzhen, Guangdong 518055 (CN)
(72) Inventor: WANG, Jingliang, Shenzhen, Guangdong 518055 (CN); LI, Jiali, Shenzhen, Guangdong 518055 (CN); ZOU, Fei, Shenzhen, Guangdong 518055 (CN)
(74) Representative: Deambrogi, Edgardo
(86) International application number: PCT/CN2024/131625
(87) International publication number: WO 2025/130446

(57) **Abstract**

Embodiments of the present disclosure provide a message processing method and apparatus. The method comprises: an interconnection network receiving a first request message and a first response message that are initiated by a first processing unit, wherein the first request message is sent to a second processing unit by the first processing unit, and the first response message is initiated after the first processing unit processes a second request message initiated by the second processing unit; allocating a first transmitting side virtual channel to the first request message, and allocating a second transmitting side virtual channel to the first response message, wherein the first transmitting side virtual channel and the second transmitting side virtual channel multiplex a physical channel in a periodic time-division mode; and respectively processing the first request message and the first response message by means of the first transmitting side virtual channel and the second transmitting side virtual channel.

## Description

### Cross-Reference to Related Application

The present disclosure is based on and claims priority to Chinese patent application CN202311769695.5 filed on December 20, 2023 and entitled "Message Processing Method and Apparatus", the disclosure of which is incorporated herein by reference in its entirety.

### Technical Field

Embodiments of the present disclosure relate to the field of communication technologies, and in particular, to a message processing method and apparatus.

### Background

With the rapid development of integrated circuits, the integration level of chips is constantly increasing. While the performance of chips has been greatly improved, the chips place higher requirements on data interaction systems. However, traditional bus-based interconnection technologies suffer from poor performance, parallelism and scalability, and can no longer meet the performance requirements of System-on-Chip (SoC) with ultra-large integration scale. Therefore, the evolution of interconnection from traditional buses to Network-on-Chip (NoC) has become the preferred communication architecture for on-chip multi-core processors.

In the design of an on-chip interconnection network, multiple aspects such as routing behavior, transaction types, flow control modes, consistency and concurrency need to be considered. When the traffic is complex, any slight oversight may lead to low network performance or deadlock. Among various deadlock situations, protocol-level deadlock is one of the major problems in NoC systems. A protocol-level network deadlock refers to a situation where one type of transaction triggers another type of transaction, resulting in a cycle formed by the mutual dependence of messages in the buffer, which makes the transactions unable to proceed and thus causes a deadlock. The occurrence of a protocol-level deadlock will lead to infinite program waiting or severe resource consumption, rendering the entire system paralyzed due to the lack of available resources and seriously affecting the security and reliability of the system.

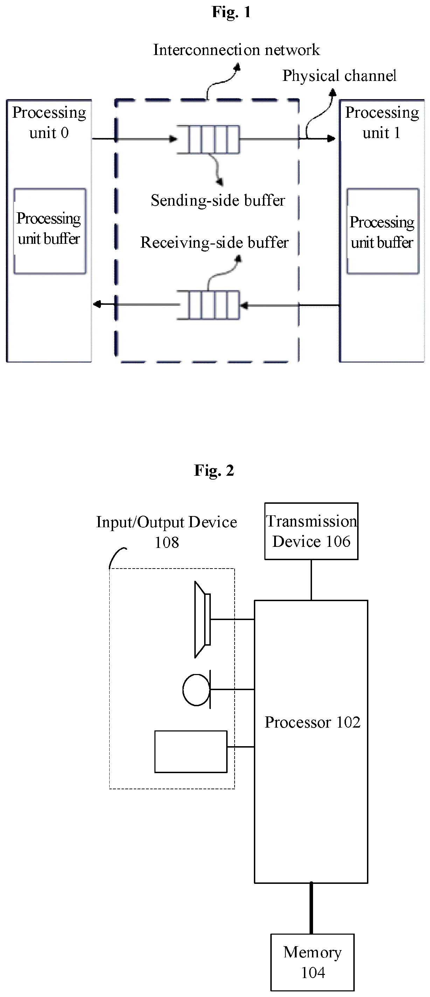

Fig. 1 is a schematic diagram of a protocol-level deadlock in the related art. As shown in Fig. 1, if the network is filled with request messages that cannot be released until their respective responses are received, a circular dependency may be caused. In Fig. 1, two processing units both generate a series of request messages that occupy all buffer resources in the network. In this case, each processing unit has to wait for a remote processing unit to respond to its own request before this processing unit can continue to process more pending requests. If all the above requests use the same network buffer resources, response messages cannot be received, thus resulting in a deadlock.

No solution has yet been proposed for the problem of protocol-level deadlock caused by circular dependency in the related art.

### Summary

The embodiments of the present disclosure provide a message processing method and apparatus, which may at least solve the problem of protocol-level deadlock caused by circular dependency in the related art.

According to at least one embodiment of the present disclosure, provided is a message processing method. The message processing method includes: receiving a first request message and a first response message initiated by a first processing unit, wherein the first request message is sent by the first processing unit to a second processing unit, and the first response message is initiated by the first processing unit after processing a second request message initiated by the second processing unit; allocating a first sending-side virtual channel to the first request message and allocating a second sending-side virtual channel to the first response message, wherein the first sending-side virtual channel and the second sending-side virtual channel time-division multiplex a physical channel in a periodic manner; and processing the first request message and the first response message through the first sending-side virtual channel and the second sending-side virtual channel, respectively.

According to another embodiment of the present disclosure, provided is a message processing apparatus. The message processing apparatus includes: a first receiving module, configured to receive a first request message and a first response message initiated by a first processing unit, wherein the first request message is sent by the first processing unit to a second processing unit, and the first response message is initiated by the first processing unit after processing a second request message initiated by the second processing unit; a first allocation module, configured to allocate a first sending-side virtual channel to the first request message and allocate a second sending-side virtual channel to the first response message, wherein the first sending-side virtual channel and the second sending-side virtual channel time-division multiplex a physical channel in a periodic manner; and a first processing module, configured to process the first request message and the first response message through the first sending-side virtual channel and the second sending-side virtual channel, respectively.

According to still another embodiment of the present disclosure, provided is a message processing system. The message processing system includes: a first processing unit, a second processing unit and an interconnection network, wherein the interconnection network is connected to the first processing unit and the second processing unit through physical channels; the first processing unit is configured to send a first request message and a first response message to the second processing unit through the interconnection network; the second processing unit is configured to send a second request message to the first processing unit through the interconnection network; and the interconnection network is configured to receive the first request message and the first response message, allocate a first sending-side virtual channel to the first request message and allocate a second sending-side virtual channel to the first response message, and process the first request message and the first response message through the first sending-side virtual channel and the second sending-side virtual channel, respectively, wherein the first sending-side virtual channel and the second sending-side virtual channel time-division multiplex a physical channel in a periodic manner.

According to yet another embodiment of the present disclosure, provided is a computer-readable storage medium. The computer-readable storage medium stores a computer program, wherein the computer program, when running on a processor, causes the processor to execute the operations in any one of the method embodiments.

According to yet another embodiment of the present disclosure, provided is an electronic device, including a memory and a processor, wherein a computer program is stored in the memory, and the processor is configured to run the computer program to execute the operations in any one of the method embodiments.

### Brief Description of the Drawings

Fig. 1 is a schematic diagram of a protocol-level deadlock in the related art;
Fig. 2 is a hardware structure block diagram of a computer device for a message processing method according to at least one embodiment of the present disclosure;
Fig. 3 is a flow chart of a message processing method according to at least one embodiment of the present disclosure;
Fig. 4 is a flow chart of a message processing method according to an exemplary embodiment of the present disclosure;
Fig. 5 is a block diagram of a message processing system according to at least one embodiment of the present disclosure;
Fig. 6 is a first block diagram of a message processing system according to an exemplary embodiment of the present disclosure;
Fig. 7 is a second block diagram of a message processing system according to an exemplary embodiment of the present disclosure;
Fig. 8 is a schematic diagram of an apparatus for preventing protocol-level deadlock in an interconnection network according to at least one embodiment of the present disclosure;
Fig. 9 is a flow chart of a processing method for resolving protocol-level deadlock in an interconnection network according to at least one embodiment of the present disclosure;
Fig. 10 is a schematic diagram of a cache coherence message format according to at least one embodiment of the present disclosure;
Fig. 11 is a schematic diagram of the structure of a buffer according to at least one embodiment of the present disclosure;
Fig. 12 is a block diagram of a message processing apparatus according to at least one embodiment of the present disclosure; and
Fig. 13 is a block diagram of a message processing apparatus according to at least one embodiment of the present disclosure.

### Detailed Description of the Embodiments

The embodiments of the present disclosure are described in detail below with reference to the accompanying drawings and in conjunction with embodiments.

It should be noted that the terms "first", "second" and the like in the description and claims of the present disclosure and the above-mentioned drawings are used to distinguish similar objects, and are not necessarily used to describe a specific order or sequence.

The method embodiments provided in the embodiments of the present disclosure may be executed on a computer device or a similar computational apparatus. Taking the execution on a computer device as an example, Fig. 2 is a hardware structure block diagram of a computer device for a message processing method according to at least one embodiment of the present disclosure. As shown in Fig. 2, the computer device may include one or more processors 102 (only one is shown in Fig. 2) (each of the one or more processors 102 may include, but is not limited to, a processing device such as a microprocessor (e.g., a Micro-Controller Unit (MCU)) or a programmable logic device) and a memory 104 for storing data. The computer device may further include a transmission device 106 for communication functions and an input/output device 108. Those skilled in the art can understand that the structure shown in Fig. 2 is merely illustrative and does not limit the structure of the computer device. For example, the computer device may also include more or fewer components than those shown in Fig. 2, or have a different configuration from that shown in Fig. 2.

The memory 104 may be used to store a computer program, for example, software programs and modules of application software, such as the computer program corresponding to the message processing method in the embodiments of the present disclosure. The one or more processors 102 execute various functional applications and data processing, that is, implements the message processing method described above, by running the computer program stored in the memory 104. The memory 104 may include a high-speed random access memory, and may also include a non-volatile memory, such as one or more magnetic storage devices, flash memories, or other non-volatile solid-state memories. In some examples, the memory 104 may further include a memory located remotely relative to the one or more processors 102. The remote memory may be connected to the computer device via a network. Examples of the above-mentioned network include, but are not limited to, the Internet, an intranet, a local area network, a mobile communication network, and a combination thereof.

The transmission device 106 is used for receiving or transmitting data via a network. Specific examples of the network may include a wireless network provided by a communication supplier of the computer device. In an example, the transmission device 106 includes a Network Interface Controller (NIC), which may be connected to other network devices through a base station to communicate with the Internet. In an example, the transmission device 106 may be a Radio Frequency (RF) module, which is used for communicating with the Internet wirelessly.

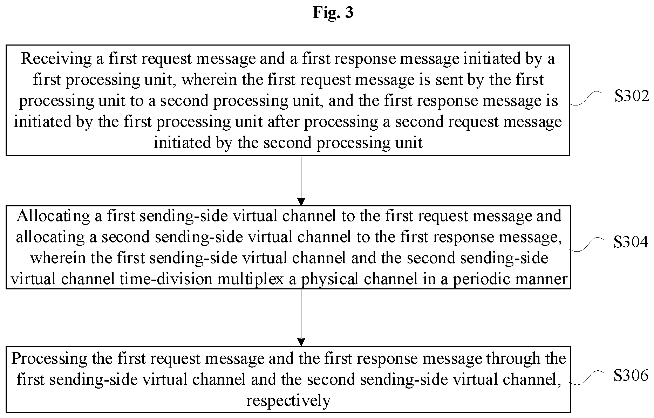

The embodiments of the present disclosure provide a message processing method running on the aforementioned computer device. Fig. 3 is a flow chart of a message processing method according to at least one embodiment of the present disclosure. As shown in Fig. 3, the message processing method is applied to an interconnection network and includes the following operations S302 to S306.

In operation S302, the interconnection network receives a first request message and a first response message initiated by a first processing unit. The first request message is sent by the first processing unit to a second processing unit, and the first response message is initiated by the first processing unit after the first processing unit processes a second request message initiated by the second processing unit.

In the embodiments of the present disclosure, the interconnection network is connected to the first processing unit and the second processing unit through physical channels respectively, and performs data transmission with the first processing unit and the second processing unit through the physical channels.

In operation S304, the interconnection network allocates a first sending-side virtual channel to the first request message and allocates a second sending-side virtual channel to the first response message. The first sending-side virtual channel and the second sending-side virtual channel time-division multiplex a physical channel in a periodic manner.

In operation S304 described above, the interconnection network allocates different sending-side virtual channels to the request message and the response message, and the different sending-side virtual channels time-division multiplex the physical channel in a periodic manner. This ensures that different types of messages are transmitted through different virtual channels.

In operation S306, the interconnection network processes the first request message and the first response message through the first sending-side virtual channel and the second sending-side virtual channel, respectively.

Through operations S302 to S306 described above, the interconnection network receives the first request message and the first response message initiated by the first processing unit, allocates the first sending-side virtual channel to the first request message and allocates the second sending-side virtual channel to the first response message (wherein the first sending-side virtual channel and the second sending-side virtual channel time-division multiplex a physical channel in a periodic manner), and processes the first request message and the first response message through the first sending-side virtual channel and the second sending-side virtual channel, respectively. This can solve the problem of protocol-level deadlock caused by circular dependency in the related art, enable different types of messages to be transmitted through different virtual channels, completely eliminate the dependency relationship between messages in the buffer, and avoid the occurrence of protocol-level deadlock.

In an embodiment, before operation S306 described above, the method further includes the following operations: the interconnection network caches the first request message into a buffer area corresponding to the first sending-side virtual channel in a sending-side buffer, and caches the first response message into a buffer area corresponding to the second sending-side virtual channel in the sending-side buffer. In the sending-side buffer, different sending-side virtual channels correspond to different buffer areas.

In an embodiment, operation S306 described above specifically includes the following operations: the interconnection network sends the first request message in the buffer area corresponding to the first sending-side virtual channel to the second processing unit through the first sending-side virtual channel, and sends the first response message in the buffer area corresponding to the second sending-side virtual channel to the second processing unit through the second sending-side virtual channel. That is, for a receiving side, different types of messages are processed through different buffer areas.

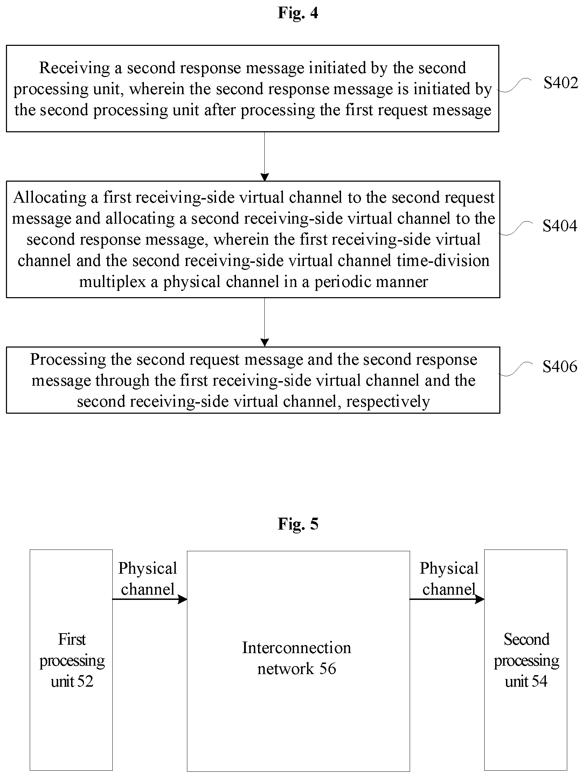

The interconnection network further includes a receiving side, and a receiving-side buffer is disposed corresponding to the receiving side. Fig. 4 is a flow chart of a message processing method according to an exemplary embodiment of the present disclosure. As shown in Fig. 4, the flow for processing messages on the receiving side includes the following operations S402 to S406.

In operation S402, the interconnection network receives a second response message initiated by the second processing unit. The second response message is initiated by the second processing unit after the second processing unit processes the first request message.

In operation S404, the interconnection network allocates a first receiving-side virtual channel to the second request message and allocates a second receiving-side virtual channel to the second response message. The first receiving-side virtual channel and the second receiving-side virtual channel time-division multiplex a physical channel in a periodic manner.

In operation S406, the interconnection network processes the second request message and the second response message through the first receiving-side virtual channel and the second receiving-side virtual channel, respectively.

Through operations S402 to S406 described above, for messages on the receiving side, different types of messages are transmitted through different virtual channels. This can also completely eliminate the dependency relationship between messages in the buffer and avoid the occurrence of protocol-level deadlock.

In an embodiment, before operation S406 described above, the message processing method further includes the following operations: the interconnection network caches the second request message into a buffer area corresponding to the first receiving-side virtual channel in a receiving-side buffer, and caches the second response message into a buffer area corresponding to the second receiving-side virtual channel in the receiving-side buffer. In the receiving-side buffer, different receiving-side virtual channels correspond to different buffer areas.

In an embodiment, operation S406 described above specifically includes the following operations: the interconnection network sends the second request message in the buffer area corresponding to the first receiving-side virtual channel to the first processing unit through the first receiving-side virtual channel, and sends the second response message in the buffer area corresponding to the second receiving-side virtual channel to the first processing unit through the second receiving-side virtual channel. That is, for the receiving side, different types of messages are also processed through different buffer areas.

The embodiments of the present disclosure also provide a message processing system. Fig. 5 is a block diagram of a message processing system according to at least one embodiment of the present disclosure. As shown in Fig. 5, the message processing system includes a first processing unit 52, a second processing unit 54 and an interconnection network 56, wherein the interconnection network 56 is connected to the first processing unit 52 and the second processing unit 54 through physical channels.

The first processing unit 52 is configured to send a first request message and a first response message to the second processing unit 54 through the interconnection network 56.

The second processing unit 54 is configured to send a second request message to the first processing unit 52 through the interconnection network 56.

The interconnection network 56 is configured to receive the first request message and the first response message, allocate a first sending-side virtual channel to the first request message and allocate a second sending-side virtual channel to the first response message, and process the first request message and the first response message through the first sending-side virtual channel and the second sending-side virtual channel, respectively, wherein the first sending-side virtual channel and the second sending-side virtual channel time-division multiplex a physical channel in a periodic manner.

The message processing system in the embodiments of the present disclosure can solve the problem of protocol-level deadlock caused by circular dependency in the related art, enable different types of messages to be transmitted through different virtual channels, completely eliminate the dependency relationship between messages in the buffer, and avoid the occurrence of protocol-level deadlock.

In an embodiment, the interconnection network 56 is further configured to cache the first request message into a buffer area corresponding to the first sending-side virtual channel in a sending-side buffer, and cache the first response message into a buffer area corresponding to the second sending-side virtual channel in the sending-side buffer.

In an embodiment, the interconnection network 56 is further configured to send the first request message in the buffer area corresponding to the first sending-side virtual channel to the second processing unit 54 through the first sending-side virtual channel, and send the first response message in the buffer area corresponding to the second sending-side virtual channel to the second processing unit 54 through the second sending-side virtual channel.

The second processing unit 54 is further configured to receive the first request message and the first response message.

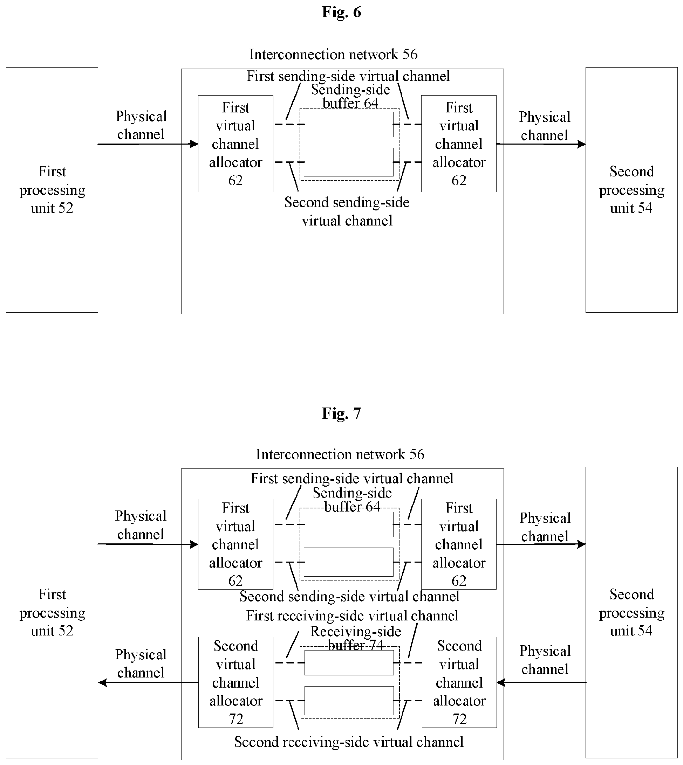

In an embodiment, Fig. 6 is a first block diagram of a message processing system according to an exemplary embodiment of the present disclosure. As shown in Fig. 6, the interconnection network 56 includes a first virtual channel allocator 62 and the sending-side buffer 64.

The first virtual channel allocator 62 is configured to allocate the first sending-side virtual channel to the first request message based on a message type of the first request message, and allocate the second sending-side virtual channel to the first response message based on a message type of the first response message.

The sending-side buffer 64 is configured to store the first request message and the first response message.

In an embodiment, the second processing unit 54 is further configured to send a second response message to the first processing unit 52 through the interconnection network 56 after processing the first request message.

The interconnection network 56 is further configured to receive the second response message, allocate a first receiving-side virtual channel to the second request message and allocate a second receiving-side virtual channel to the second response message, and process the second request message and the second response message through the first receiving-side virtual channel and the second receiving-side virtual channel, respectively, wherein the first receiving-side virtual channel and the second receiving-side virtual channel time-division multiplex a physical channel in a periodic manner.

In an embodiment, the interconnection network 56 is further configured to cache the second request message into a buffer area corresponding to the first receiving-side virtual channel in a receiving-side buffer, and cache the second response message into a buffer area corresponding to the second receiving-side virtual channel in the receiving-side buffer.

In an embodiment, the interconnection network 56 is further configured to send the second request message in the buffer area corresponding to the first receiving-side virtual channel to the first processing unit 52 through the first receiving-side virtual channel, and send the second response message in the buffer area corresponding to the second receiving-side virtual channel to the first processing unit 52 through the second receiving-side virtual channel.

The first processing unit 52 is further configured to receive the second response message.

In an embodiment, Fig. 7 is a second block diagram of a message processing system according to an exemplary embodiment of the present disclosure. As shown in Fig. 7, the interconnection network 56 includes a second virtual channel allocator 72 and the receiving-side buffer.

The second virtual channel allocator 72 is configured to allocate the first receiving-side virtual channel to the second request message based on a message type of the second request message, and allocate the second receiving-side virtual channel to the second response message based on a message type of the second response message.

The receiving-side buffer 74 is configured to store the second request message and the second response message.

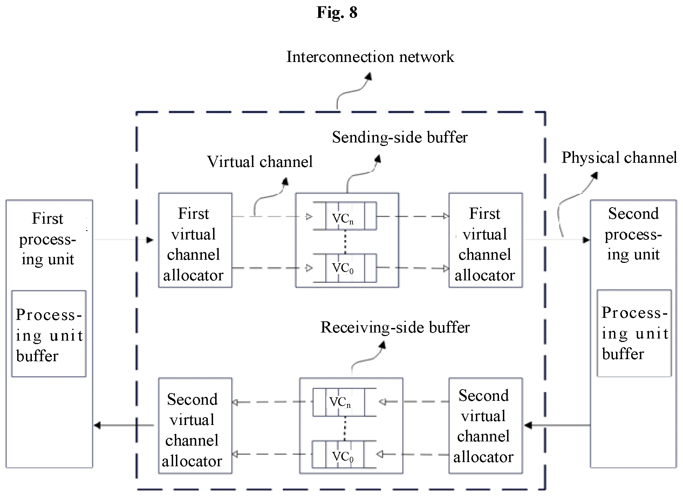

Fig. 8 is a schematic diagram of an apparatus for preventing protocol-level deadlock in an interconnection network according to at least one embodiment of the present disclosure. As shown in Fig. 8, the apparatus includes processing units (including a first processing unit and a second processing unit), a processing unit buffer, virtual channel allocators (including a first virtual channel allocator and a second virtual channel allocator), virtual channels (including a first sending-side virtual channel, a second sending-side virtual channel, a first receiving-side virtual channel and a second receiving-side virtual channel), a sending-side buffer, a receiving-side buffer and physical channels. In the aforementioned example, a processing unit refers to a device capable of initiating requests and receiving responses. The processing unit buffer can store and track a request processing status, and can only release a request in the buffer after receiving a response corresponding to this request. A virtual channel allocator allocates a corresponding message to a virtual channel of a corresponding buffer based on the message type. When sending requests in the buffer areas of multiple virtual channels to a physical channel, a polling arbitration strategy is adopted, and only the virtual channel that wins the arbitration can transmit messages through the physical channel, with a clock cycle as the switching granularity. Each virtual channel can transmit messages of the corresponding type. The sending-side buffer and the receiving-side buffer are variable-length buffer queues, which consist of dedicated resources for different virtual channels and common resources. The dedicated resources of each virtual channel can only cache messages of the corresponding type, and the common resources can be dynamically allocated according to the current number of messages. A physical channel is a top-level physical interface bus in actual implementation.

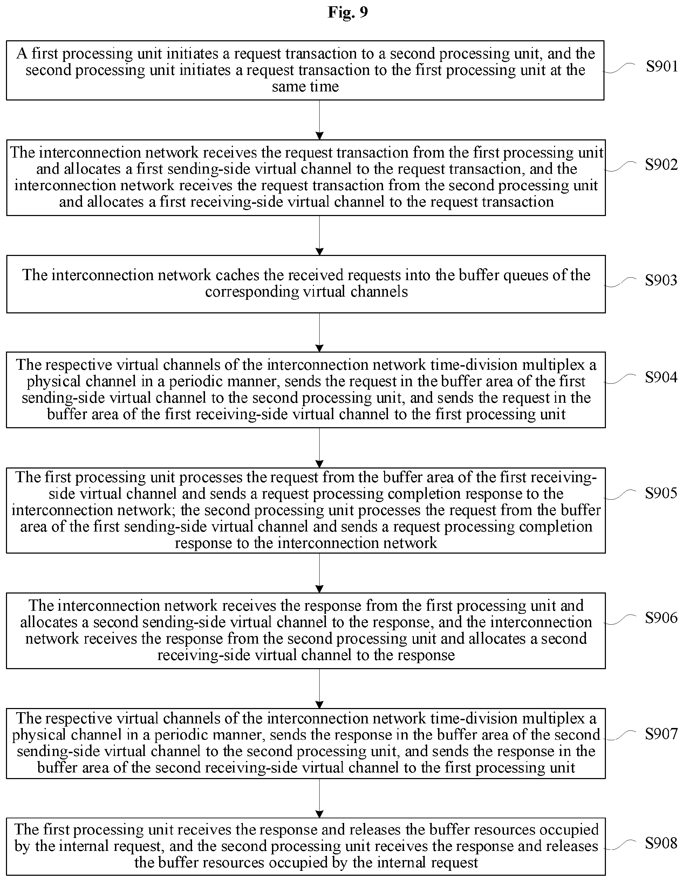

Fig. 9 is a flow chart of a processing method for resolving protocol-level deadlock in an interconnection network according to at least one embodiment of the present disclosure. As shown in Fig. 9, the method includes the following operations S901 to S908.

In operation S901, a first processing unit initiates a request transaction to a second processing unit, and the second processing unit initiates a request transaction to the first processing unit at the same time.

In operation S902, the interconnection network receives the request transaction from the first processing unit and allocates a first sending-side virtual channel to the request transaction, and the interconnection network receives the request transaction from the second processing unit and allocates a first receiving-side virtual channel to the request transaction.

In operation S903, the interconnection network caches the received requests into the buffer queues of the corresponding virtual channels.

In operation S904, the respective virtual channels of the interconnection network time-division multiplex a physical channel in a periodic manner, sends the request in the buffer area of the first sending-side virtual channel to the second processing unit, and sends the request in the buffer area of the first receiving-side virtual channel to the first processing unit.

In operation S905, the first processing unit processes the request from the buffer area of the first receiving-side virtual channel and sends a request processing completion response to the interconnection network; the second processing unit processes the request from the buffer area of the first sending-side virtual channel and sends a request processing completion response to the interconnection network.

In operation S906, the interconnection network receives the response from the first processing unit and allocates a second sending-side virtual channel to the response, and the interconnection network receives the response from the second processing unit and allocates a second receiving-side virtual channel to the response.

In operation S907, the respective virtual channels of the interconnection network time-division multiplex a physical channel in a periodic manner, sends the response in the buffer area of the second sending-side virtual channel to the second processing unit, and sends the response in the buffer area of the second receiving-side virtual channel to the first processing unit.

In operation S908, the first processing unit receives the response and releases the buffer resources occupied by the internal request, and the second processing unit receives the response and releases the buffer resources occupied by the internal request.

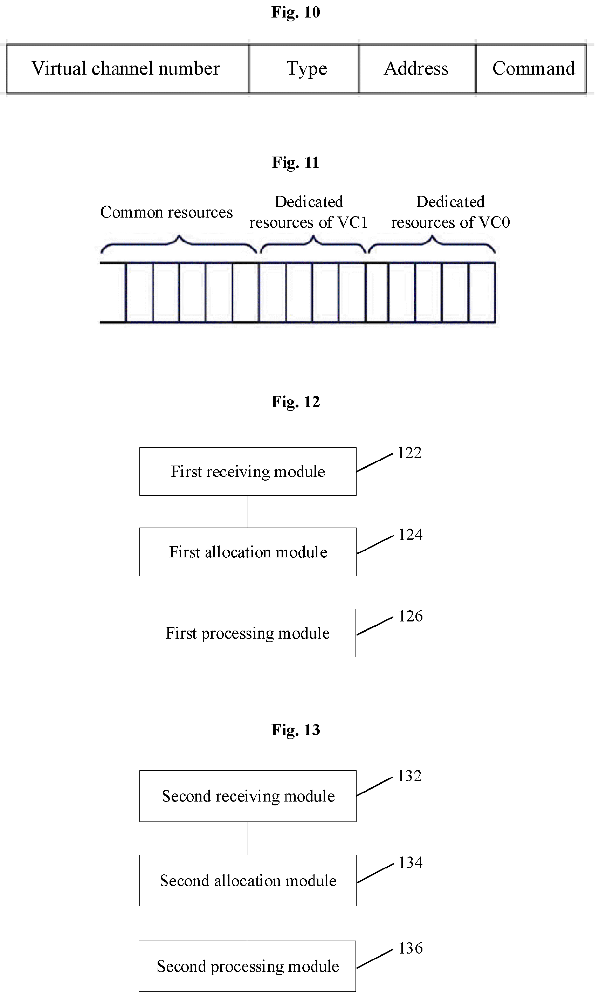

Fig. 10 is a schematic diagram of a cache coherence message format according to at least one embodiment of the present disclosure. As shown in Fig. 10, a virtual channel allocator allocates virtual channels based on the virtual channel number information or the message type of a message.

Fig. 11 is a schematic diagram of the structure of a buffer according to at least one embodiment of the present disclosure. As shown in Fig. 11, the total buffer resources are divided into three types: the first type is VC0 dedicated resources, the second type is VC1 dedicated resources, and the third type is common resources. For a new message, the message type of this message is identified first, and then this message is stored using the dedicated resources of the virtual channel corresponding to this message. The dedicated resources of VC0 cannot be used to store messages of the type corresponding to VC1. Messages generated after the exhaustion of the dedicated resources are stored by using the common resources. In this way, the entire virtual channel resources can be dynamically allocated based on the current traffic of different messages, improving resource utilization efficiency.

The embodiments of the present disclosure also provide a message processing apparatus applied to an interconnection network. Fig. 12 is a block diagram of a message processing apparatus according to at least one embodiment of the present disclosure. As shown in Fig. 12, the message processing apparatus includes:
a first receiving module 122, configured to receive a first request message and a first response message initiated by a first processing unit, wherein the first request message is sent by the first processing unit to a second processing unit, and the first response message is initiated by the first processing unit after processing a second request message initiated by the second processing unit;
a first allocation module 124, configured to allocate a first sending-side virtual channel to the first request message and allocate a second sending-side virtual channel to the first response message, wherein the first sending-side virtual channel and the second sending-side virtual channel time-division multiplex a physical channel in a periodic manner; and
a first processing module 126, configured to process the first request message and the first response message through the first sending-side virtual channel and the second sending-side virtual channel, respectively.

In an embodiment, the message processing apparatus further includes:
a sending module, configured to cache the first request message into a buffer area corresponding to the first sending-side virtual channel in a sending-side buffer; and
a first caching module, configured to cache the first response message into a buffer area corresponding to the second sending-side virtual channel in the sending-side buffer.

In an embodiment, the first processing module 126 is further configured to send the first request message in the buffer area corresponding to the first sending-side virtual channel to the second processing unit through the first sending-side virtual channel, and send the first response message in the buffer area corresponding to the second sending-side virtual channel to the second processing unit through the second sending-side virtual channel.

Fig. 13 is a block diagram of a message processing apparatus according to at least one embodiment of the present disclosure. As shown in Fig. 13, the message processing apparatus further includes:
a second receiving module 132, configured to receive a second response message initiated by the second processing unit, wherein the second response message is initiated by the second processing unit after processing the first request message;
a second allocation module 134, configured to allocate a first receiving-side virtual channel to the second request message and allocate a second receiving-side virtual channel to the second response message, wherein the first receiving-side virtual channel and the second receiving-side virtual channel time-division multiplex a physical channel in a periodic manner; and
a second processing module 136, configured to process the second request message and the second response message through the first receiving-side virtual channel and the second receiving-side virtual channel, respectively.

In an embodiment, the message processing apparatus further includes:
a second caching module, configured to cache the second request message into a buffer area corresponding to the first receiving-side virtual channel in a receiving-side buffer, and cache the second response message into a buffer area corresponding to the second receiving-side virtual channel in the receiving-side buffer.

In an embodiment, the second processing module 136 is further configured to send the second request message in the buffer area corresponding to the first receiving-side virtual channel to the first processing unit through the first receiving-side virtual channel, and send the second response message in the buffer area corresponding to the second receiving-side virtual channel to the first processing unit through the second receiving-side virtual channel.

The embodiments of the present disclosure also provide a computer-readable storage medium. The computer-readable storage medium stores a computer program, wherein the computer program, when being executed by a processor, causes the processor to implement the operations in any one of the method embodiments described above.

In an exemplary embodiment, the aforementioned computer-readable storage medium may include, but is not limited to, a U disk, a Read-Only Memory (ROM), a Random Access Memory (RAM), a mobile hard disk, a magnetic disk, an optical disc, or any other medium that can store a computer program.

The embodiments of the present disclosure also provide an electronic device, including a memory and a processor. The memory stores a computer program, and the processor is configured to run the computer program to implement the operations in any one of the method embodiments described above.

In an exemplary embodiment, the aforementioned electronic device may further include a transmission device and an input/output device, wherein the transmission device is connected to the processor, and the input/output device is connected to the processor.

The specific examples in the embodiments of the present disclosure may refer to the examples described in the foregoing embodiments and exemplary implementations, and are not described again in the embodiments of the present disclosure.

Obviously, those skilled in the art should understand that the above-mentioned modules or operations of the present disclosure can be implemented by a general-purpose computing device. The modules or operations can be concentrated on a single computing device or distributed over a network composed of multiple computing devices. The modules or operations can be implemented by program code executable by a computing device. Therefore, the program code can be stored in a storage device and executed by the computing device. Moreover, in some cases, the operations shown or described can be executed in an order different from the order described here, or they can be made into individual integrated circuit modules respectively, or multiple modules or operations among them can be made into a single integrated circuit module for implementation. Thus, the present disclosure is not limited to any specific combination of hardware and software.

The foregoing is only exemplary embodiments of the present disclosure and is not intended to limit the present disclosure. For those skilled in the art, the present disclosure may have various modifications and changes. Any modification, equivalent replacement, improvement, etc., made within the principles of the present disclosure shall fall within the protection scope of the present disclosure.

## Claims

1. A message processing method applied to an interconnection network, the message processing method comprising:
receiving a first request message and a first response message initiated by a first processing unit, wherein the first request message is sent by the first processing unit to a second processing unit, and the first response message is initiated by the first processing unit after processing a second request message initiated by the second processing unit;
allocating a first sending-side virtual channel to the first request message and allocating a second sending-side virtual channel to the first response message, wherein the first sending-side virtual channel and the second sending-side virtual channel time-division multiplex a physical channel in a periodic manner; and
processing the first request message and the first response message through the first sending-side virtual channel and the second sending-side virtual channel, respectively.

2. The message processing method according to claim 1, wherein before processing the first request message and the first response message through the first sending-side virtual channel and the second sending-side virtual channel, respectively, the message processing method further comprises:
caching the first request message into a buffer area corresponding to the first sending-side virtual channel in a sending-side buffer; and
caching the first response message into a buffer area corresponding to the second sending-side virtual channel in the sending-side buffer.

3. The message processing method according to claim 2, wherein the first request message and the first response message are processed through the buffer area corresponding to the first sending-side virtual channel and the buffer area corresponding to the second sending-side virtual channel, respectively, comprising:
sending the first request message in the buffer area corresponding to the first sending-side virtual channel to the second processing unit through the first sending-side virtual channel; and
sending the first response message in the buffer area corresponding to the second sending-side virtual channel to the second processing unit through the second sending-side virtual channel.

4. The message processing method according to any one of claims 1 to 3, wherein the message processing method further comprises:
receiving a second response message initiated by the second processing unit, wherein the second response message is initiated by the second processing unit after processing the first request message;
allocating a first receiving-side virtual channel to the second request message and allocating a second receiving-side virtual channel to the second response message, wherein the first receiving-side virtual channel and the second receiving-side virtual channel time-division multiplex a physical channel in a periodic manner; and
processing the second request message and the second response message through the first receiving-side virtual channel and the second receiving-side virtual channel, respectively.

5. The message processing method according to claim 4, wherein before processing the second request message and the second response message through the first receiving-side virtual channel and the second receiving-side virtual channel, respectively, the message processing method further comprises:
caching the second request message into a buffer area corresponding to the first receiving-side virtual channel in a receiving-side buffer; and
caching the second response message into a buffer area corresponding to the second receiving-side virtual channel in the receiving-side buffer.

6. The message processing method according to claim 5, wherein processing the second request message and the second response message through the first receiving-side virtual channel and the second receiving-side virtual channel, respectively, comprises:
sending the second request message in the buffer area corresponding to the first receiving-side virtual channel to the first processing unit through the first receiving-side virtual channel; and
sending the second response message in the buffer area corresponding to the second receiving-side virtual channel to the first processing unit through the second receiving-side virtual channel.

7. A message processing apparatus applied to an interconnection network, the message processing apparatus comprising:
a first receiving module, configured to receive a first request message and a first response message initiated by a first processing unit, wherein the first request message is sent by the first processing unit to a second processing unit, and the first response message is initiated by the first processing unit after processing a second request message initiated by the second processing unit;
a first allocation module, configured to allocate a first sending-side virtual channel to the first request message and allocate a second sending-side virtual channel to the first response message, wherein the first sending-side virtual channel and the second sending-side virtual channel time-division multiplex a physical channel in a periodic manner; and
a first processing module, configured to process the first request message and the first response message through the first sending-side virtual channel and the second sending-side virtual channel, respectively.

8. A message processing system, comprising: a first processing unit, a second processing unit and an interconnection network, wherein the interconnection network is connected to the first processing unit and the second processing unit through physical channels;
the first processing unit is configured to send a first request message and a first response message to the second processing unit through the interconnection network;
the second processing unit is configured to send a second request message to the first processing unit through the interconnection network; and
the interconnection network is configured to receive the first request message and the first response message, allocate a first sending-side virtual channel to the first request message and allocate a second sending-side virtual channel to the first response message, and process the first request message and the first response message through the first sending-side virtual channel and the second sending-side virtual channel, respectively, wherein the first sending-side virtual channel and the second sending-side virtual channel time-division multiplex a physical channel in a periodic manner.

9. The message processing system according to claim 8, wherein
the interconnection network is further configured to cache the first request message into a buffer area corresponding to the first sending-side virtual channel in a sending-side buffer, and cache the first response message into a buffer area corresponding to the second sending-side virtual channel in the sending-side buffer.

10. The message processing system according to claim 9, wherein
the interconnection network is further configured to send the first request message in the buffer area corresponding to the first sending-side virtual channel to the second processing unit through the first sending-side virtual channel, and send the first response message in the buffer area corresponding to the second sending-side virtual channel to the second processing unit through the second sending-side virtual channel; and
the second processing unit is further configured to receive the first request message and the first response message.

11. The message processing system according to claim 9, wherein the interconnection network comprises a first virtual channel allocator and the sending-side buffer, and
the first virtual channel allocator is configured to allocate the first sending-side virtual channel to the first request message based on a message type of the first request message, and allocate the second sending-side virtual channel to the first response message based on a message type of the first response message; and
the sending-side buffer is configured to store the first request message and the first response message.

12. The message processing system according to any one of claims 8 to 11, wherein
the second processing unit is further configured to send a second response message to the first processing unit through the interconnection network after processing the first request message; and
the interconnection network is further configured to receive the second response message, allocate a first receiving-side virtual channel to the second request message and allocate a second receiving-side virtual channel to the second response message, and process the second request message and the second response message through the first receiving-side virtual channel and the second receiving-side virtual channel, respectively, wherein the first receiving-side virtual channel and the second receiving-side virtual channel time-division multiplex a physical channel in a periodic manner.

13. The message processing system according to claim 12, wherein
the interconnection network is further configured to cache the second request message into a buffer area corresponding to the first receiving-side virtual channel in a receiving-side buffer, and cache the second response message into a buffer area corresponding to the second receiving-side virtual channel in the receiving-side buffer.

14. The message processing system according to claim 13, wherein
the interconnection network is further configured to send the second request message in the buffer area corresponding to the first receiving-side virtual channel to the first processing unit through the first receiving-side virtual channel, and send the second response message in the buffer area corresponding to the second receiving-side virtual channel to the first processing unit through the second receiving-side virtual channel; and
the first processing unit is further configured to receive the second response message.

15. The message processing system according to claim 13, wherein the interconnection network comprises a second virtual channel allocator and the receiving-side buffer, and
the second virtual channel allocator is configured to allocate the first receiving-side virtual channel to the second request message based on a message type of the second request message, and allocate the second receiving-side virtual channel to the second response message based on a message type of the second response message; and
the receiving-side buffer is configured to store the second request message and the second response message.

16. A computer-readable storage medium having a computer program stored therein, wherein the computer program, when running on a processor, is configured to cause the processor to execute the message processing method according to any one of claims 1 to 6.

17. An electronic device, comprising a memory and a processor, wherein a computer program is stored in the memory, and the processor is configured to run the computer program to execute the message processing method according to any one of claims 1 to 6.
